(19) Europäisches Patentamt
European Patent Office
Office européen des brevets

(11) **EP 4 247 869 B1**

(12) **EUROPÄISCHE PATENTSCHRIFT**

(45) Veröffentlichungstag und Bekanntmachung des Hinweises auf die Patenterteilung:
**12.06.2024 Patentblatt 2024/24**

(21) Anmeldenummer: **20812247.3**

(22) Anmeldetag: **23.11.2020**

(51) Internationale Patentklassifikation (IPC):
**C08F 218/08** (2006.01)    **C08F 2/00** (2006.01)
**C08F 2/01** (2006.01)

(52) Gemeinsame Patentklassifikation (CPC):
(C-Sets verfügbar)
**C08F 218/08; C08F 2/002; C08F 2/01;
C08F 210/02**                                (Forts.)

(86) Internationale Anmeldenummer:
**PCT/EP2020/083091**

(87) Internationale Veröffentlichungsnummer:
**WO 2022/106041 (27.05.2022 Gazette 2022/21)**

(54) **VERFAHREN ZUR HERSTELLUNG VON WÄSSRIGEN POLYMERDISPERSIONEN IN EINEM ROHRREAKTOR**

PROCESS FOR PREPARING AQUEOUS POLYMER DISPERSIONS IN A TUBULAR REACTOR

PROCÉDÉ DE PRÉPARATION DE DISPERSIONS POLYMÈRES AQUEUSES DANS UN RÉACTEUR TUBULAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**27.09.2023 Patentblatt 2023/39**

(73) Patentinhaber: **Wacker Chemie AG
81737 München (DE)**

(72) Erfinder:
• **ANGERER, Michael
84489 Burghausen (DE)**
• **BRAUNSPERGER, Robert
84547 Emmerting (DE)**
• **SCHULTHEISS, Peter
84503 Altötting (DE)**

(74) Vertreter: **Ege, Markus et al
Wacker Chemie AG
Hanns-Seidel-Platz 4
81737 München (DE)**

(56) Entgegenhaltungen:
EP-A1- 0 446 059      EP-A1- 0 489 211
WO-A1-2020/221435     JP-A- S50 144 792
US-A1- 2009 131 610

(52) Gemeinsame Patentklassifikation (CPC): (Forts.)

    C-Sets
    C08F 210/02, C08F 210/18

**Beschreibung**

Die Erfindung gemäß Ansprüchen 1 bis 16 betrifft Verfahren zur Herstellung von Vinylacetat-Ethylen-Copolymeren in Form von wässrigen Dispersionen mittels radikalisch initiierter Emulsionspolymerisation in einem kontinuierlich betriebenen Rohrreaktor und die Verwendung der damit erhaltenen Verfahrensprodukte.

Wässrige Polymerdispersionen werden in vielfältigen Anwendungsgebieten als Bindemittel eingesetzt, beispielsweise in Klebstoffen, Coatinganwendungen, als Bindemittel in Teppich-, Textil- und Papieranwendungen, sowie in bauchemischen Produkten, wie zum Beispiel Fliesenkleber, Putzen und Dichtungsmassen. Die Herstellung solcher Dispersionen erfolgt üblicherweise durch wässrige Emulsionspolymerisation in gerührten Batchreaktoren oder auch in kontinuierlich betriebenen Rührkesselkaskaden, wie in der EP 1 323 752 B1 beschrieben. Die Raum-Zeit-Ausbeute und Prozesseffizienz solcher Verfahren wird jedoch begrenzt durch die limitierte Abfuhr von Reaktionswärme aus dem Reaktor, beispielsweise über Kühlschlangen oder Reaktorwände. Zur Steigerung der Kühleffizienz können Reaktoren mit größeren Oberflächen- zu Volumenverhältnissen eingesetzt werden, beispielsweise Rohrreaktoren. Bei der Emulsionspolymerisation in Rohrreaktoren bereitet es jedoch Probleme, Polymere mit Partikelgrößenverteilungen, insbesondere engen Partikelgrößenverteilungen oder während der Durchführung des Verfahrens gleichbleibenden Partikelgrößenverteilungen, herzustellen, was in Batchreaktor- oder Rührkesselkaskaden-Verfahren etabliert ist. Bei der Polymerisation gasförmiger Monomere, wie Ethylen, in Rohrreaktoren wird diese Problemstellung noch erschwert.

Zudem macht in Rohrreaktoren auch die Bildung von Ablagerungen, sogenanntes Fouling (Polymerfouling), besondere Probleme, was sogar zum Verstopfen der Rohrreaktoren führen kann und jedenfalls beim Entfernen solcher Ablagerungen nach Abschalten der Reaktoren die Laufzeit und Effizienz der Anlagen drastisch reduziert. Auch durch Einbau von Rührern in Rohrreaktoren lässt sich das Polymerfouling nicht vermeiden, wie beispielsweise mit den in US4383093 beschriebenen speziellen, Helix-artigen Rührern für rohrförmige Polymerisationsreaktoren. In Rührkesseln tritt Polymerfouling zwar auch auf, aber auf Grund der geringeren Kühloberfläche und anderer Reaktorgeometrie nicht so gravierend. Mit Antifoulingmittelbeschichtungen kann der Belagaufbau zwar in Rührkesseln hinreichend reduziert werden, wie in der EP 3 256 497 B1 beschrieben, nicht aber in Rohrreaktoren. Die DE1137216, US 2015/9068031, WO2015/089823 und EP2471594 beschreiben Rohrreaktoren mit wandgängigen Rührern beziehungsweise Abstreifern. Dadurch wird aber der Belagaufbau nicht unterbunden, sondern mechanisch entfernt, was eine mechanische Belastung darstellt und zudem zu Verstopfungen führen kann und die Polymerpartikelgrößenverteilung beeinflusst. Die EP0029701 lehrt, Wandbeläge durch pulsierende Strömungen aus dem Rohrreaktor zu entfernen. Die PCT/EP2019/061017 (Anmeldenummer) empfiehlt hierzu die Umkehrung der Strömungsrichtung im Rohrreaktor.

WO 2020/221435 A1 auch beschreibt eine kontinuierliche Emulsionspolymerisation von Vinylacetat und Ethylen in einem kontinuierlich betriebenen Rohrreaktor.

Vor diesem Hintergrund bestand die Aufgabe, verbesserte Verfahren zur Herstellung von Vinylacetat-Ethylen-Copolymeren in Form von wässrigen Dispersionen mittels wässriger Emulsionspolymerisation bereitzustellen, in denen die Raum-Zeit-Leistung (Prozesseffizienz) gesteigert und gleichzeitig eine hohe Anlagenverfügbarkeit gewährleistet werden kann. Zudem sollten während der kontinuierlichen Emulsionspolymerisation in Rohrreaktoren Vinylacetat-Ethylen-Copolymere mit möglichst konstanter Partikelgrößenverteilung gebildet werden. Die in Rohrreaktoren durch kontinuierliche Emulsionspolymerisation erhaltenen Polymerdispersionen sollten auch möglichst ein Eigenschaftsprofil, wie Partikelgrößenverteilung, Modalität oder Viskosität, aufweisen, wie sie bei der herkömmlichen Emulsionspolymerisation in gerührten Batchreaktoren oder kontinuierlichen Rührkesselkaskaden erhalten werden.

Die Aufgabe wurde für Vinylacetat-Ethylen-Copolymere überraschenderweise durch kontinuierliche, wässrige Emulsionspolymerisation in Rohrreaktoren gelöst, die ein oder mehrere mit flüssigkeitsdurchlässigen Öffnungen versehene, quer zur Fließrichtung des Reaktorinhalts angebrachte Trennbleche enthielten.

Rohrreaktoren oder Rührkolonnen mit Trennblechen sind an sich bekannt, beispielsweise aus "Rührtechnik - Theorie und Praxis", Marko Zlokarnik, Springer-Verlag, 1999, ISBN: 3-540-64639-6, S. 305-308, nicht jedoch in Zusammenhang mit der Herstellung von Vinylacetat-Ethylen-Copolymerdispersionen.

Gegenstand der Erfindung sind Verfahren zur Herstellung von Vinylacetat-Ethylen-Copolymeren in Form von wässrigen Dispersionen mittels radikalisch initiierter Emulsionspolymerisation in einem kontinuierlich betriebenen Rohrreaktor, dadurch gekennzeichnet, dass in den Rohrreaktor quer zur Fließrichtung des Reaktorinhalts (Polymerisationsmischung) ein oder mehrere mit flüssigkeitsdurchlässigen Öffnungen versehene Trennbleche angebracht sind.

Die erfindungsgemäßen, mit flüssigkeitsdurchlässigen Öffnungen versehenen Trennbleche werden im Folgenden auch abgekürzt als Trennbleche bezeichnet.

Die Fließrichtung des Reaktorinhalts wird im Folgenden auch knapp als Fließrichtung oder Durchflussrichtung abgekürzt. Die Fließrichtung bezeichnet hierbei allgemein die Nettofließrichtung des Reaktorinhalts, also allgemein die Gesamtfließrichtung des insgesamten Reaktorinhalts. Die Nettofließrichtung beschreibt allgemein die globale oder übergeordnete Fließrichtung des Reaktorinhalts und nicht etwaige lokale, wie turbulente oder sonstige ungerichtete, Strömungen. Der Begriff Reaktorinhalt bezeichnet allgemein die Polymerisationsmischung umfassend Monomere, Initiatoren und Wasser, also allgemein die im Rohrreaktor enthaltene Emulsionspolymerisationsmischung.

Die Trennbleche sind vorzugsweise flache Bauteile, haben vorzugsweise die Form einer Platte, Scheibe, eines flachen Zylinders oder Rings. Trennbleche sind also allgemein flächige oder planare Körper, deren Flächendurchmesser wesentlich größer sind als deren Höhe. Allgemein ist die Ausdehnung der Trennbleche in eine Dimension deutlich kleiner (Rand) als die in die beiden anderen Dimensionen (Flachseite). Trennbleche haben allgemein keine helikale oder schraubenartige Form. Die Gestalt der Trennbleche orientiert sich vorzugsweise an der Form des Querschnitts an der jeweiligen Stelle des Rohrreaktors, an der das jeweilige Trennblech angebracht ist.

Ein oder mehrere Trennbleche, vorzugsweise alle Trennbleche, sind im Rohrreaktor quer zur Durchflussrichtung, vorzugsweise radial oder senkrecht oder im Wesentlichen senkrecht zur Durchflussrichtung, eingebaut. Ein oder mehrere Trennbleche, vorzugsweise alle Trennbleche, sind mit ihrer Flachseite parallel oder im Wesentlichen parallel zueinander angeordnet.

Die Trennbleche sind vorzugsweise statisch. Die Trennbleche sind während der Durchführung der Emulsionspolymerisation vorzugsweise unbeweglich oder unbewegt.

Ein Rohrreaktor enthält vorzugsweise 3 bis 30 Trennbleche, besonders bevorzugt 7 bis 20 Trennbleche und am meisten bevorzugt 10 bis 15 Trennbleche.

Die Trennbleche stehen vorzugsweise mit ihrem Rand in Kontakt mit der Innenwand des Rohrreaktors, besonders bevorzugt über den gesamten Umfang des Randes eines Trennblechs. Alternativ können zwischen Trennblech und Rohrreaktorinnenwand auch ein oder mehrere Dichtungen, beispielsweise Gummi-, Silikon- oder PTFE-Dichtungen, oder ein Ring, beispielsweise ein Metallring oder eine Metallscheibe, angebracht sein. Vorzugsweise ist zwischen Trennblech und Rohrreaktorinnenwand kein freier, flüssigkeitsdurchlässiger Spalt vorhanden. Vorzugsweise strömt zwischen Trennblech und Rohrreaktorinnenwand kein Reaktorinhalt hindurch.

Die Trennbleche können beispielsweise fest an den Rohrreaktor, insbesondere an den Reaktordeckel, Reaktorboden oder an die Rohrreaktorinnenwand, fixiert sein, beispielsweise angeschweißt oder durch eine, gegebenenfalls mit einer Dichtung ausgestatteten Halterung fixiert sein. Vorzugsweise sind die Trennbleche nicht an die Rohrreaktorinnenwand, insbesondere nicht über ihren Rand an die Rohrreaktorinnenwand fixiert.

Vorzugsweise sind ein oder mehrere, vorzugsweise alle, benachbarten Trennbleche durch ein oder mehrere Stäbe miteinander verbunden. Stäbe sind vorzugsweise an Flachseiten der Trennbleche angebracht, insbesondere außerhalb des von Rührern erfassten Bereichs. Stäbe dienen allgemein der statischen Stabilisierung der Trennbleche beziehungsweise des Rohrreaktors.

Das Gebilde aus Trennblechen und Stäben wird auch als Käfig bezeichnet. Ein Käfig ist vorzugsweise am Reaktorboden und/oder besonders bevorzugt am Reaktordeckel befestigt. Eine solche Montage eines Käfigs hat den Vorteil, dass sämtliche Trennbleche gleichzeitig und damit zeiteffizient aus dem Rohrreaktor entnommen werden können, ohne den Rohrreaktor aufwändig in Einzelteile zerlegen zu müssen. Auch Rührer lassen sich so einfach und zeiteffizient einbringen oder austauschen.

Ein oder jedes Trennblech teilt den Reaktorinnenraum in Zellen, auch Kompartimente genannt. Die Anzahl der Zellen ist vorzugsweise um die Zahl eins größer als die Anzahl der Trennbleche. Zwei benachbarte Zellen sind durch vorzugsweise 2 bis 8, besonders bevorzugt 2 bis 6 und am meisten bevorzugt 3 bis 4 Stäbe miteinander verbunden. Durch die flüssigkeitsdurchlässigen Öffnungen der Trennbleche kann Reaktorinhalt von einer Zelle in die benachbarte Zelle strömen, insbesondere in Durchflussrichtung. Unterschiedliche Zellen stehen vorzugsweise ausschließlich über die flüssigkeitsdurchlässigen Öffnungen der Trennbleche miteinander im Austausch von Reaktorinhalt, insbesondere in Durchflussrichtung.

Der Durchmesser einer Zelle dividiert durch die Höhe einer Zelle beträgt vorzugsweise 0,25 bis 4, besonders bevorzugt 0,33 bis 3 und am meisten bevorzugt 0,5 bis 2. Der Durchmesser einer Zelle entspricht einem Innendurchmesser, vorzugsweise dem durchschnittlichen Innendurchmesser, des Rohrreaktors an der Stelle der jeweiligen Zelle. Die Höhe einer Zelle ist die lichte Strecke zwischen den beiden Trennblechen, die eine Zelle begrenzen. Vorzugsweise haben alle Zellen dieselbe Höhe und/oder denselben Durchmesser. Vorzugsweise liegen die vorgenannten Verhältnisse aus Durchmesser und Höhe aller Zellen in den vorgenannten Bereichen. Besonders bevorzugt haben alle Zellen dasselbe Verhältnis aus Durchmesser und Höhe, insbesondere an sämtlichen Stellen sämtlicher Zellen.

Die flüssigkeitsdurchlässigen Öffnungen der Trennbleche können auch als Löcher bezeichnet werden. Ein Loch reicht vorzugsweise durch das gesamte Trennblech hindurch. Ein Loch erstreckt sich vorzugsweise von einer Flachseite bis zur gegenüberliegenden Flachseite eines Trennblechs. Ein Loch befindet sich vorzugsweise in der Mitte oder im Wesentlichen in der Mitte der Flachseiten eines Trennblechs. Bei den Trennblechen handelt es sich also vorzugsweise um gelochte Trennbleche oder Lochscheiben. Ein Trennblech kann ein oder mehrere Löcher haben. Vorzugsweise hat ein Trennblech 1 bis 1000 Löcher, mehr bevorzugt 1 bis 100 Löcher, noch mehr bevorzugt 1 bis 10 Löcher, besonders bevorzugt 1 bis 5 Löcher und am meisten bevorzugt ein Loch.

Die Löcher können an sich beliebige Formen annehmen. Vorzugsweise hat ein Loch eine kreisrunde oder eine im Wesentlichen kreisrunde Form.

Generell strömt der Reaktorinhalt im Zuge des Durchfließens des Rohrreaktors durch die Löcher der Trennbleche hindurch. Vorzugsweise passiert der Reaktorinhalt ein Trennblech ausschließlich durch das oder die Löcher des Trennblechs.

Die mittlere Fließgeschwindigkeit V des Reaktorinhalts an der Stelle des freien Durchmessers eines Lochs beträgt vorzugsweise ≥ 0,05%, besonders bevorzugt ≥ 0,5% und am meisten bevorzugt ≥ 1% der Rührerumfangsgeschwindigkeit. Die genannte mittlere Fließgeschwindigkeit V beträgt vorzugsweise ≤ 50%, besonders bevorzugt ≤ 10% und am meisten bevorzugt ≤ 5% der Rührerumfangsgeschwindigkeit. Die Rührerumfangsgeschwindigkeit berechnet sich folgendermaßen: Kreiszahl n multipliziert mit dem Rührerdurchmesser multipliziert mit der Rührerdrehzahl. Der Rührerdurchmesser ist allgemein die weiteste Ausladung des Rührers radial zum Rührerschaft, bei einem Blattrührer also allgemein der Abstand zwischen zwei einander am weitesten entfernten gegenüberliegenden Rührerblattspitzen. Die mittlere Fließgeschwindigkeit V des Reaktorinhaltes wird allgemein erhalten, indem der durch den Rohrreaktor strömende Volumenstrom durch die freie Durchgangsfläche eines Lochs dividiert wird. Die freie Durchgangsfläche eines Lochs ist allgemein die kleinste freie Fläche, die radial zur Hauptströmungsrichtung in einem Loch vorliegt. Der freie Durchmesser entspricht bei kreisförmigen Löchern, insbesondere bei kreisförmigen Löchern, bei denen der Durchgang über die komplette Lochfläche ungehindert ist, allgemein dem Lochdurchmesser. Bei nicht kreisförmigen Löchern wird der freie Durchmesser allgemein erhalten, indem die freie Durchgangsfläche des Loches durch den Lochumfang dividiert und das Ergebnis mit vier multipliziert wird. Der durch den Reaktor strömende Volumenstrom wird erhalten, indem der durch den Reaktor strömende Massenstrom durch dessen Dichte dividiert wird. Bei mehrphasigen Strömungen werden allgemein Massenstrom und Dichte für jede Phase bestimmt und die sich ergebenden Volumenströme addiert. Der Massenstrom und die Dichte von ein- oder mehrphasigen Fluiden kann beispielsweise mit Hilfe von Coriolis-Durchflussmessgeräten am Reaktorein- und Austritt gemessen werden. Vorzugsweise wird der freie Durchmesser eines Lochs und/oder die Rührerumfangsgeschwindigkeit so gewählt, dass die mittlere Fließgeschwindigkeit des Reaktorinhalts im vorgenannten Bereich liegt.

An ein oder mehrere, vorzugsweise alle, Löcher der Trennbleche können Leitbleche angebracht sein. Die Leitbleche befinden sich vorzugsweise am Rand eines Loches und erstrecken sich vorzugsweise über den gesamten Rand eines Loches. Leitbleche sind vorzugsweise senkrecht zu den Trennblechen angebracht. Leitbleche sind vorzugsweise parallel zum Rührerschaft ausgerichtet. Vorzugsweise ist an ein Loch ein Leitblech angebracht, das sich vorzugsweise über den gesamten Rand des Lochs erstreckt. Leitbleche können beispielsweise in die beiden durch ein Trennblech getrennten Zellen ragen. Vorzugsweise ragt ein Leitblech nur in eine Zelle. Leitbleche sind vorzugsweise auf der in Fließrichtung oder Hauptströmungsrichtung stromaufwärts und/oder besonders bevorzugt stromabwärts gelegenen Seite des Trennblechs angebracht. Leitbleche sind vorteilhaft zur Herstellung von Copolymeren mit den gewünschten Partikelgrößen und Partikelgrößenverteilungen.

Leitbleche ragen vorzugweise mit der Länge L in die beiden durch ein Trennblech getrennte Zellen. Das Verhältnis der Länge L eines Leitblechs zu einem freien Durchmesser eines Lochs ist vorzugsweise ≥ 0,25, besonders bevorzugt ≥ 0,5 und am meisten bevorzugt ≥ 1. Das vorgennannte Verhältnis ist vorzugsweise ≤ 10, besonders bevorzugt ≤ 5 und am meisten bevorzugt ≤ 2.

Alternativ zu Leitblechen können auch dicke Trennbleche eingesetzt werden. Die Dicke L eines Trennblechs realisiert vorzugsweise die vorgenannten Verhältnisse aus L eines Leitblechs zum freien Durchmesser eines Lochs.

Es können Rohrreaktoren ohne Rührer Einsatz finden. Bevorzugt sind Rohrreaktoren mit Rührer, beispielsweise Blattrührer, Scheibenrührer, Balkenrührer oder Rushton-Turbinen. Die Wirkrichtung des Rührers oder die Richtung der Verdrängung durch den Rührer ist vorzugsweise radial oder senkrecht zur Fließrichtung des Reaktorinhalts. Die Wirkrichtung des Rührers ist vorzugsweise nicht in Fließrichtung des Reaktorinhalts. Pro Zelle können mehrere oder vorzugsweise ein Rührer angebracht sein.

Besonders bevorzugt sind Rohrreaktoren mit einem Rühraggregat umfassend einen Rührerschaft, an den ein oder mehrere Rührer, insbesondere Rührerblätter, angebracht sind. Der Rührerschaft ist vorzugsweise in Richtung der Durchflussrichtung orientiert. Der Rührerschaft ist vorzugsweise parallel oder im Wesentlichen parallel zur Durchflussrichtung und/oder konzentrisch oder im Wesentlichen konzentrisch zum Durchmesser des Rohrreaktors angeordnet. Der Rührerschaft erstreckt sich vorzugsweise über ein oder mehrere Zellen und besonders bevorzugt über alle Zellen. Ein Rührerschaft erstreckt sich vorzugsweise von einem Längsende bis zum anderen Längsende eines Rohrreaktors. Der Rührerschaft wird vorzugsweise durch ein Loch eines Trennblechs, besonders bevorzugt wird der Rührerschaft durch ein Loch eines jeden im Rohrreaktor befindlichen Trennblechs geführt. Der Rührerschaft füllt ein Loch vorzugsweise nicht vollständig aus. Vorzugsweise lässt ein in einem Loch befindlicher Rührerschaft noch einen freien Spalt zwischen Rührerschaft und Trennblech. Vorzugsweise sind in einer oder mehreren Zellen, besonders bevorzugt in allen Zellen ein oder mehrere Rührer, insbesondere Rührerblätter, an den Rührerschaft angebracht.

Ein Rohrreaktor enthält vorzugsweise ein Rühraggregat oder einen Rührerschaft.

Die globale Netto-Fließgeschwindigkeit U des Reaktorinhaltes entlang des Rührerschafts ist vorzugsweise um mindestens 2 Größenordnungen kleiner, besonders bevorzugt um mindestens 3 Größenordnungen kleiner und am meisten bevorzugt um mindestens 4 Größenordnungen kleiner als die Rührerumfangsgeschwindigkeit. Diese Angaben beziehen sich vorzugsweise auf jede beliebige Stelle des Rührerschafts im Rohrreaktor. Die globale Netto-Fließgeschwindigkeit U kann berechnet werden, indem der durch den Reaktor fließende Volumenstrom durch die Querschnittsfläche des Reaktors dividiert wird.

Die Drehzahl des Rührers oder des Rührerschafts wird wie üblich auch bedingt durch die Gesamtdimensionierung des Rohrreaktors, beträgt vorzugsweise zwischen 100 und 10000 Umdrehungen pro Minute und besonders bevorzugt zwischen 200 und 2000 Umdrehungen pro Minute. Eine Umdrehung steht für eine Umdrehung des Rührers oder des Rührerschafts um seine Längsachse beziehungsweise um die Achse, die parallel zur Durchflussrichtung ist. Der Rührer oder das Rühraggregat kann in gängiger Weise beispielsweise über ein mechanisches Getriebe angetrieben oder über eine Magnetkupplung und gegebenenfalls über eine Gleitringdichtung abgedichtet sein.

Eine Kennzahl für den Rohrreaktor ist das Verhältnis von dessen Länge zu Durchmesser. Die Länge entspricht allgemein der Dimension des Rohrreaktors in Durchflussrichtung, der Durchmesser allgemein der Dimension des Rohrreaktors quer zur Durchflussrichtung. Die Länge und der Durchmesser des Rohrreaktors beziehen sich hierbei vorzugsweise auf die entsprechenden lichten Weiten des Innenraums des Rohrreaktors. Vorzugsweise besteht ein Verhältnis von Länge zu Durchmesser von 8:1 bis 40:1, besonders bevorzugt von 10:1 bis 25:1. Auch mit diesem Parameter kann die Partikelgrößenverteilung der Polymerpartikel beeinflusst werden.

Der Rohrreaktor kann, bezogen auf seine Längsrichtung beziehungsweise auf die Durchflussrichtung, vertikal, horizontal oder in einer Lage zwischen diesen beiden Richtungen angeordnet sein. Die Längsrichtung des Rohrreaktors ist allgemein die Strecke vom Reaktorboden zum Reaktordeckel. Die vertikale Anordnung ist bevorzugt. Wenn der Rohrreaktor nicht horizontal angeordnet ist, kann ihn der Reaktorinhalt mit der Schwerkraft von oben nach unten durchströmen oder vorzugsweise entgegen der Schwerkraft von unten nach oben durchströmen.

Die Durchflussrichtung im Rohrreaktor kann während der Durchführung des erfindungsgemäßen Verfahrens beispielsweise umgekehrt oder geändert werden. Alternativ oder vorzugsweise wird die Durchflussrichtung im Rohrreaktor während der Durchführung des erfindungsgemäßen Verfahrens nicht umgekehrt oder geändert.

Ansonsten können die Rohrreaktoren auf gängige Weise aufgebaut sein. Die Rohrreaktoren können an sich beliebige Formen annehmen. Bevorzugt sind Rohrreaktoren mit rohrähnlicher oder zylinderförmiger Geometrie, besonders bevorzugt mit gleichmäßiger zylinderförmiger Geometrie. Beispiele für Rohrreaktoren sind Strömungsrohre, Rohrreaktoren mit Einbauten (z.B. Statikmischern), Rohrbündelreaktoren, Schleifenreaktoren, Taylor-Reaktoren sowie Rohr-in-Rohr-Reaktoren.

Die mittlere Verweilzeit des Reaktorinhalts im Rohrreaktor beträgt vorzugsweise 10 Minuten bis 5 Stunden, besonders bevorzugt 15 Minuten bis 3 Stunden, am meisten bevorzugt 20 Minuten bis 2 Stunden und am allermeisten bevorzugt 30 Minuten bis 90 Minuten. Die mittlere Verweilzeit kann beispielsweise über die Fließgeschwindigkeit des Reaktorinhalts, die Geschwindigkeit der Dosierungen oder die Dimensionierung des Rohrreaktors eingestellt werden.

Die Verweilzeitverteilung des Reaktorinhalts im Rohrreaktor kann beispielsweise durch die Bodensteinzahl Bo charakterisiert werden. Die Bodensteinzahl Bo ist vorzugsweise $\geq 15$, besonders bevorzugt $\geq 20$ und am meisten bevorzugt $\geq 25$. Die Bodensteinzahl Bo ist vorzugsweise $\leq 200$, besonders bevorzugt $\leq 150$ und am meisten bevorzugt $\leq 100$.

Die Bodensteinzahl Bo kann beispielsweise mit folgender Formel berechnet werden:

$$E_\theta(\theta) = 0{,}5 \cdot \sqrt{\frac{Bo}{\pi \cdot \theta}} \cdot \exp\left(-\frac{(1-\theta)^2 \cdot Bo}{4 \cdot \theta}\right);$$

$E_\theta(\theta)$ ist die dimensionslose Verweilzeitverteilung und ergibt sich mit der Formel: $E_\theta(\theta) = E(t) \cdot \tau$;
$\tau$ ist die Verweilzeit und errechnet sich aus dem Reaktorvolumen dividiert durch den Volumenstrom. Der Volumenstrom durch den Reaktor kann berechnet werden, indem der Massenstrom durch den Reaktor durch dessen Dichte dividiert wird. Beide Werte können beispielsweise auf herkömmliche Weise mit Coriolis-Durchflussmessgeräten am Reaktorein- und Austritt gemessen werden. Ergeben sich am Ein- und Austritt unterschiedliche Volumenströme, so wird vorzugsweise der arithmetische Mittelwert für die Berechnung verwendet. Die dimensionslose Zeit $\theta = t/\tau$ wird aus der Verweilzeit berechnet, indem die aktuelle Zeit $t$ durch die Verweilzeit $\tau$ dividiert wird. Die Verweilzeitverteilung $E(t)$ kann experimentell auf herkömmliche Weise bestimmt werden, beispielsweise über eine sogenannte Sprungantwort. Die Messung einer Sprungantwort kann beispielsweise über die sprunghafte Veränderung der Konzentration eines gelösten Salzes, wie Natriumchlorid, im Feed des Rohrreaktors und die zeitaufgelöste Messung der daraus folgenden Konzentrationsänderung des gelösten Salzes am Reaktoraustritt erfolgen, beispielsweise mit Hilfe einer Leitfähigkeitssonde.

Des Weiteren können die Rohrreaktoren auch Einbauten enthalten, wie statische Mischelemente. In den Rohrreaktor können beispielsweise axial zur Fließrichtung des Reaktorinhalts ein oder mehrere Stromstörerplatten angebracht sein. Vorzugsweise enthält der Rohrreaktor zwei, besonders bevorzugt drei und am meisten bevorzugt vier Stromstörerplatten pro Zelle. Auch dies kann zur besseren Lösung der erfindungsgemäßen Aufgabe beitragen.

Des Weiteren ist ein Rohrreaktor im Allgemeinen mit einer oder mehreren Dosierleitungen ausgestattet, welche gegebenenfalls mit einer vorgelagerten Mischeinheit verbunden sind. Über Dosierleitungen können allgemein Edukte oder sonstige Ausgangsstoffe, vorzugsweise kontinuierlich, in den Rohrreaktor eingebracht werden. In der Mischeinheit können allgemein Edukte oder sonstige Ausgangsstoffe gemischt werden. An eine oder mehrere Zellen können ein oder mehrere Dosierleitungen angebracht sein. Über die Zudosierung an unterschiedlichen Stellen des Rohrreaktors kann die Partikelgrößenverteilung der Copolymere wie auch das Fouling und die Raum-Zeit-Ausbeute des Rohrreaktors beeinflusst werden.

Ein Rohrreaktor kann beispielsweise mit 1 bis 100, vorzugsweise 2 bis 75, besonders bevorzugt 3 bis 50 und am meisten bevorzugt 5 bis 30 Dosierleitungen ausgestattet sein.

Der Rohrreaktor kann allgemein mit gängigen Kühl- und/oder Heizvorrichtungen temperiert werden, wie beispielsweise mit Mantelkühlern oder Mantelheizern. Kühl- und/oder Heizvorrichtungen können beispielsweise am Rohrreaktor an der Wandung oder an eingebauten Kühlschlangen angebracht sein. Beispielsweise kann die äußere Reaktorwand mit einem Kühl- oder Heizmantel (Doppelmantelrohr) versehen sein, dessen Zwischenraum von einer Temperierflüssigkeit durchströmt wird. Beispielsweise können in das Reaktorvolumen Rohrschlangen eingebracht sein, die von einer Temperierflüssigkeit durchströmt werden. Vorzugsweise wird ein Rohrreaktor mit Rohrschlangen eingesetzt.

Die Temperierung kann in mehrere Zonen eingeteilt sein, in denen die Temperierfüssigkeit mit unterschiedlichen Eintrittstemperaturen und/ oder Massenströmen eingesetzt wird. Damit kann der Temperaturverlauf über die Reaktion gezielt beeinflusst werden. Auch auf diese Weise kann die Partikelgrößenverteilung der Copolymere wie auch das Fouling und die Raum-Zeit-Ausbeute des Rohrreaktors beeinflusst werden.

Die Rohrreaktoren können wandgängige Rührer, Abstreifer und/oder Wischerblätter enthalten. Vorzugsweise enthalten die Rohrreaktoren keinen wandgängigen Rührer, keinen Abstreifer und/oder keine Wischerblätter. Solche Zubehörteile können zur Entfernung von Belagaufbau eingesetzt werden, sind erfindungsgemäß vorteilhafterweise aber nicht erforderlich.

Die Rohrreaktoren, Stromstörerplatten, Leitbleche, Rührer, Rühraggregate oder die sonstigen Bestandteile der Rohrreaktoren können aus gängigen Materialien aufgebaut sein, beispielsweise Edelstahl.

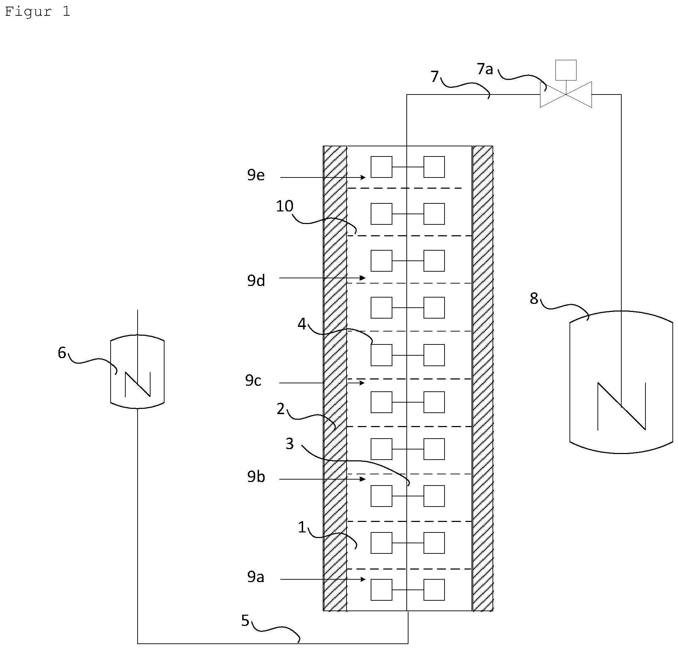

Eine bevorzugte Ausgestaltung eines Rohrreaktors zur Durchführung des erfindungsgemäßen Verfahrens ist in Figur 1 beispielhaft an Hand von Rohrreaktor (1) dargestellt. Die Ausführungsform in Figur 1 ist rein illustrativ und dient zur Erläuterung des Verfahrens und ist in keiner Hinsicht einschränkend für die vorliegende Erfindung.

Der Rohrreaktor (1), in dem die Emulsionspolymerisation stattfindet, ist aus einem Stahlrohr, vorzugsweise einem Doppelmantelrohr (2), aufgebaut, welches im Innern einen axial angeordneten Rührerschaft (3) aufweist, welcher mit mehreren Rührern (4) bestückt ist. Der Rohrreaktor (1) ist durch neun Trennbleche (10) in 10 Zellen unterteilt. Der Rohrreaktor (1) ist mit einer Dosierleitung (5) ausgestattet, welcher mit einer vorgelagerten Mischeinheit (6) zur Mischung der Edukte verbunden ist. Der Rohrreaktor (1) ist über eine Entnahmeleitung (7) mit einem nachgeschalteten Behälter (8) verbunden, in dem das Polymerisationsprodukt aufgefangen und gegebenenfalls nachbehandelt wird.

Über die Dosierleitung (5) können die Ausgangsstoffe, vorzugsweise kontinuierlich, in den Rohrreaktor (1) eingebracht werden. Durch die Entnahmeleitung (7) kann das Polymerisationsprodukt aus dem Rohrreaktor (1), vorzugsweise kontinuierlich, abgeführt werden. Über eine oder mehrere weitere Dosiervorrichtungen (9a) bis (9e), können entlang des Rohrreaktors weitere Stoffe, vorzugsweise Initiatoren, dem Rohrreaktor zugeführt werden.

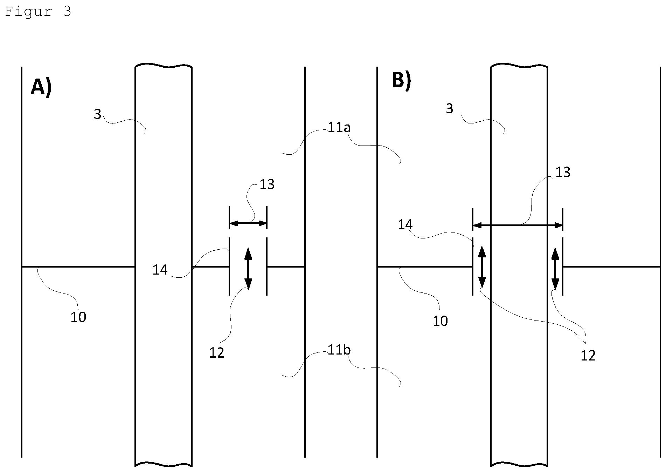

Figur 3 zeigt beispielhaft zwei bevorzugte Ausführungsformen A) und B). Darin trennt Trennblech (10) die beiden Zellen (11a) und (11b). Durch die flüssigkeitsdurchlässige Öffnung (13) im Trennblech (10) kann der Reaktorinhalt (12) von Zelle (11a) in Zelle (11b) oder umgekehrt strömen. Ein Leitblech (14) ist um den gesamten Rand der flüssigkeitsdurchlässigen Öffnung (13) angebracht. Eine mit Leitblech (14) ausgestattete flüssigkeitsdurchlässige Öffnung (13) kann sich an einer beliebigen Stelle des Trennblechs (10) befinden. Vorzugsweise ist ein Rührerschaft (3) durch eine mit Leitblech (14) ausgestattete flüssigkeitsdurchlässige Öffnung (13) geführt, wie in Ausführungsform B) der Figur 3 gezeigt. Alternativ ist kein Rührerschaft (3) durch eine mit Leitblech (14) ausgestattete flüssigkeitsdurchlässige Öffnung (13) geführt, wie in Ausführungsform A) der Figur 3 gezeigt.

Die Polymerisation erfolgt nach dem Emulsionspolymerisationsverfahren in wässrigem Medium, vorzugsweise werden keine organischen Lösungsmittel eingesetzt. Die Polymerisationstemperatur des Polymerisationsgemischs im Rohrreaktor liegt vorzugsweise zwischen 40°C und 140°C und besonders bevorzugt zwischen 50°C und 120°C. Der Druck im Rohrreaktor hängt davon ab, ob die zu polymerisierenden Monomere bei der jeweiligen Polymerisationstemperatur flüssig oder gasförmig vorliegen und beträgt vorzugsweise 1 bis 110 $bar_{abs.}$. Bei der Copolymerisation von gasförmigen Comonomeren wie Ethylen, 1,3-Butadien oder Vinylchlorid wird unter Druck, und besonders bevorzugt bei 10 bis 80 $bar_{abs.}$ polymerisiert.

Ein oder mehrere Bestandteile des Reaktionsgemisches oder der Polymerisationsmischung (Ausgangsstoffe) können vorab in einer Mischeinheit zu einer Voremulsion abgemischt werden und kontinuierlich dem Rohrreaktor zugeführt werden. Vorzugsweise werden die Bestandteile des Reaktionsgemisches kontinuierlich in einer Mischeinheit zu einer Voremulsion abgemischt und diese in den Rohrreaktor transportiert. Im Falle einer thermischen Initiierung wird vorzugsweise so vorgegangen, dass kein Oxidationskatalysator in die Voremulsion gegeben wird. Im Falle der Initiierung mit einer Redox-Initiator-Kombination wird vorzugsweise so vorgegangen, dass der Reduktionsinitiator in die Voremulsion gegeben wird und der Oxidationsinitiator vorzugsweise separat von der Voremulsion in den Rohrreaktor zugegeben wird. Der Transport erfolgt mittels Pumpen oder über den reinen Massefluss bei vollständig gefüllter Mischeinheit. Bei der Mischeinheit kann es sich beispielsweise um einen Rührkessel oder eine statische Mischstrecke handeln. Die Mischeinheit kann mit einem Doppelmantel versehen werden, um gegebenenfalls während des Mischens zu kühlen oder zu heizen.

Eine bevorzugte Mischung (Voremulsion) umfasst ein oder mehrere ethylenisch ungesättigte Monomere, ein oder mehrere Schutzkolloide und/oder ein oder mehrere Emulgatoren, und gegebenenfalls ein oder mehrere Initiatoren, insbesondere Reduktionsinitiatoren, insbesondere keine Oxidationsinitiatoren. Vorzugsweise wird die insgesamte Menge an ethylenisch ungesättigten Monomeren, Schutzkolloiden und/oder Emulgatoren in die Voremulsion eingebracht. Die Voremulsion kann über ein oder mehrere Dosierleitungen in den Rohrreaktor eingebracht werden. Vorzugsweise wird die Voremulsion an dem Ende des Rohrreaktors eingebracht, das der Entnahmestelle gegenüber liegt. Vorzugsweise werden ein oder mehrere Initiatoren, insbesondere Oxidationsinitiatoren, über ein oder mehrere weitere Dosierleitungen zugegeben, vorzugsweise in mindestens zwei Zellen, besonders bevorzugt in mindestens 3 Zellen und am meisten bevorzugt in mindestens vier Zellen. Vorzugsweise wird in die Zelle, in die Voremulsion eingebracht wird, auch Oxidationsinitiator zudosiert, insbesondere über eine separate Dosierleitung. Auch diese Maßnahmen sind hilfreich, um die erfindungsgemäße Aufgabe besser zu lösen.

Die Ausgangsstoffe können vor Einbringen in den Rohrreaktor temperiert werden. So können beispielsweise ein oder mehrere Ausgangsstoffe bei Einbringen in den Rohrreaktor auf eine Temperatur knapp unterhalb der Polymerisationstemperatur oder auf Polymerisationstemperatur temperiert sein, vorzugsweise zwischen 10°C und der Polymerisationstemperatur temperiert sein. Vorzugsweise werden die vorgenannten Mischungen auf eine Temperatur zwischen der Polymerisationstemperatur und 20°C unterhalb der Polymerisationstemperatur, insbesondere auf 10°C unterhalb der Polymerisationstemperatur temperiert.

Vor Beginn der Polymerisation wird der Rohrreaktor vorzugsweise mit einer Polymerdispersion befüllt, welche vorzugsweise dem Endprodukt der Polymerisation bezüglich Polymerzusammensetzung, Art und Menge des Schutzkolloids sowie Partikelgröße und Festgehalt entspricht. Alternativ kann der Rohrreaktor vor Beginn des erfindungsgemäßen Verfahrens, das heißt vor Beginn der Polymerisation, mit einer Mischung befüllt werden, welche die Ausgangsstoffe, aber keine Initiatoren, insbesondere keine Oxidationsinitiatoren umfasst. Schließlich kann der Rohrreaktor vor Beginn des erfindungsgemäßen Verfahrens mit Wasser, vorzugsweise ausschließlich mit Wasser befüllt sein.

Der Rohrreaktor wird im Allgemeinen kontinuierlich betrieben. Im kontinuierlichen Betrieb werden während der Emulsionspolymerisation die Ausgangsstoffe, insbesondere ethylenisch ungesättigte Monomere, Schutzkolloide und/oder Emulgatoren und/oder Initiatoren, in den Rohrreaktor eingebracht und das Polymerisationsprodukt aus dem Rohrreaktor entnommen. Bei kontinuierlichem Betrieb sollen die eintretenden Massenströme den austretenden Massenströmen entsprechen.

Die Polymerisation wird im Allgemeinen bis zu einem Umsatz von mindestens 80 Gew.-%, vorzugsweise bis zu einem Umsatz von 85 bis 99 Gew.-%, der unter Polymerisationsbedingungen flüssigen Monomere geführt. Anschließend kann das Polymerisationsprodukt beispielsweise in einen Sammelbehälter (Entspannungsbehälter) überführt werden. Der Transport erfolgt allgemein mittels Pumpen oder aufgrund der Druckdifferenz zwischen Rohrreaktor und Sammelbehälter. Im Sammelbehälter kann gegebenenfalls in Anwendung bekannter Methoden nachpolymerisiert werden, beispielsweise durch mit Redoxkatalysator initiierter Nachpolymerisation. Der flüchtige Restmonomeranteil wird gegebenenfalls anschließend mittels Überleiten oder vorzugsweise Durchleiten von inerten Schleppgasen wie Luft, Stickstoff oder vorzugsweise Wasserdampf über/durch das wässrige Polymerisationsgemisch in dem Fachmann bekannter Weise entfernt (Strippen). Das Polymerisationsprodukt wird nach dessen Nachbehandlung dem Sammelbehälter entnommen und beispielsweise in einem Silo gelagert. Alternativ können der Entspannungsschritt, etwaiges Nachpolymerisieren oder Strippen auch kontinuierlich ausgeführt werden.

Die ethylenisch ungesättigten Monomere werden vorzugsweise ausgewählt aus der Gruppe umfassend Vinylester, (Meth)acrylsäureester, Vinylaromaten, Olefine, 1,3-Diene und Vinylhalogenide und gegebenenfalls weitere damit copolymerisierbare Monomeren.

Geeignete Vinylester sind solche von Carbonsäuren mit 1 bis 18 C-Atomen. Bevorzugt werden Vinylacetat, Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit 9 bis 11 C-Atomen, beispielsweise VeoVa9® oder VeoVa10® (Handelsnamen der Firma Hexion). Besonders bevorzugt ist Vinylacetat.

Geeignete Monomeren aus der Gruppe der Acrylsäureester oder Methacrylsäureester sind beispielsweise Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat. Besonders bevorzugt sind Methylacrylat, Methylmethacrylat, n-Butylacrylat, t-Butylacrylat und 2-Ethylhexylacrylat.

Als Vinylaromaten bevorzugt sind Styrol, Methylstyrol und Vinyltoluol. Bevorzugtes Vinylhalogenid ist Vinylchlorid. Die bevorzugten Olefine sind Ethylen, Propylen und die bevorzugten Diene sind 1,3-Butadien und Isopren.

Gegebenenfalls können noch 0 bis 10 Gew.-%, bezogen auf das Gesamtgewicht des Monomergemisches, Hilfsmonomere copolymerisiert werden. Bevorzugt werden 0,1 bis 5 Gew.-% Hilfsmonomere eingesetzt. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid; ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Diallylphthalat, Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat.

Bevorzugt werden ein oder mehrere Monomere ausgewählt aus der Gruppe umfassend Vinylester; Vinylester-Gemische enthaltend mehrere Monomere aus der Gruppe umfassend Vinylester, Olefine, Vinylaromaten, Vinylhalogenide, Acrylsäureester, Methacrylsäureester, Fumar- und/oder Maleinsäuremono- oder -diester; (Meth)acrylsäureester; (Meth)acrylsäureester-Gemische enthaltend eine oder mehrere Monomere aus der Gruppe umfassend Methacrylsäureester, Acrylsäureester, Olefine, Vinylaromaten, Vinylhalogenide, Fumar- und/oder Maleinsäuremono- oder -diester; Monomere oder Monomergemische von Dienen wie Butadien oder Isopren, sowie von Olefinen wie Ethen oder Propen, wobei die Diene beispielsweise mit Styrol, (Meth)acrylsäureestern oder den Estern der Fumar- oder Maleinsäure copolymerisiert sein können; Monomere oder Monomergemische aus Vinylaromaten, wie Styrol, Methylstyrol, Vinyltoluol; Monomere oder Monomergemische aus Vinylhalogenverbindungen wie Vinylchlorid, wobei die Monomergemische noch Hilfsmonomere umfassen können.

Besonders bevorzugt werden Monomergemische von Vinylacetat mit 1 bis 50 Gew.-% Ethylen; Monomergemische von Vinylacetat mit 1 bis 50 Gew.- % Ethylen und 1 bis 50 Gew.-% von einem oder mehreren weiteren Comonomeren aus der Gruppe der Vinylester mit 3 bis 12 C-Atomen im Carbonsäurerest wie Vinylpropionat, Vinyllaurat, Vinylester von alpha-verzweigten Carbonsäuren mit 9 bis 11 C-Atomen wie VeoVa9®, VeoVa10®; Monomergemische von einem oder mehreren Vinylestern, 1 bis 50 Gew.-% Ethylen und vorzugsweise 1 bis 60 Gew.-% (Meth)Acrylsäureester von unverzweigten oder verzweigten Alkoholen mit 1 bis 15 C-Atomen, insbesondere n-Butylacrylat oder 2 Ethylhexylacrylat; Monomergemische mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, insbesondere n-Butylacrylat oder 2-Ethylhexylacrylat, welche noch 1 bis 40 Gew.-% Ethylen enthalten; Monomergemische mit einem oder mehreren Vinylestern, 1 bis 50 Gew. % Ethylen und 1 bis 60 Gew.-% Vinylchlorid; wobei die genannten Monomergemische jeweils noch die genannten Hilfsmonomere in den genannten Mengen enthalten können, und sich die Angaben in Gew.-% auf jeweils 100 Gew.-% aufaddieren.

Besonders bevorzugt werden auch (Meth)acrylsäureester-Monomergemische, wie Monomergemische von n-Butylacrylat oder 2-Ethylhexylacrylat oder Copolymerisate von Methylmethacrylat mit n-Butylacrylat und/oder 2-Ethylhexylacrylat; Styrol-Acrylsäureester-Monomergemische mit einem oder mehreren Monomeren aus der Gruppe Methylacrylat, Ethylacrylat, Propylacrylat, n-Butylacrylat, 2-Ethylhexylacrylat; Vinylacetat-Acrylsäureester-Monomergemische mit einem oder mehreren Monomeren aus der Gruppe Methylacrylat, Ethylacrylat, Propylacrylat, n-Butylacrylat, 2-Ethylhexylacrylat und gegebenenfalls Ethylen; Styrol-1,3-Butadien-Monomergemische ; wobei die genannten Monomergemische noch Hilfsmonomere in den genannten Mengen enthalten können, und sich die Angaben in Gew.-% auf jeweils 100 Gew.-% aufaddieren.

Beispiele für besonders bevorzugte Comonomere für Vinylchlorid-Monomergemische sind α-Olefine wie Ethylen und Propylen, Vinylester wie Vinylacetat, Acrylsäureester und Methacrylsäureester von Alkoholen mit 1 bis 15 C-Atomen wie Methylacrylat, Methylmethacrylat, Ethylacrylat, Ethylmethacrylat, Propylacrylat, Propylmethacrylat, n-Butylacrylat, t-Butylacrylat, n-Butylmethacrylat, t-Butylmethacrylat, 2-Ethylhexylacrylat, Fumar- und Maleinsäuremono- oder -diester wie die Dimethyl- und Diethylester der Maleinsäure und Fumarsäure.

Am meisten bevorzugt werden Monomergemische mit Vinylacetat und 5 bis 50 Gew.-% Ethylen; Monomergemische mit Vinylacetat und 1 bis 50 Gew.- % Ethylen und 1 bis 50 Gew.-% von einem Vinylester von α-verzweigten Monocarbonsäuren mit 9 bis 11 C-Atomen; Monomergemische mit 30 bis 75 Gew.-% Vinylacetat, 1 bis 30 Gew.-% Vinyllaurat oder einem Vinylester einer α-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, welche gegebenenfalls noch 1 bis 40 Gew.-% Ethylen enthalten; Monomergemische mit Vinylacetat, 5 bis 50 Gew.-% Ethylen und 1 bis 60 Gew.-% Vinylchlorid; sowie Monomergemische enthaltend 60 bis 98 Gew.-% Vinylchlorid und 1 bis 40 Gew.-% Ethylen, wobei die Monomergemische jeweils noch Hilfsmonomere in den genannten Mengen enthalten können, und sich die Angaben in Gew.-% auf jeweils 100 Gew.-% aufaddieren.

Die Monomerauswahl und die Auswahl der Gewichtsanteile der Comonomere erfolgt dabei so, dass im Allgemeinen eine Glasübergangstemperatur Tg von -50°C bis +50°C, bevorzugt von -20°C bis +30°C, resultiert. Die Glasübergangstemperatur Tg der Polymerisate kann in bekannter Weise mittels Differential Scanning Colorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: $1/Tg = x1/Tg1 + x2/Tg2 + ... + xn/Tgn$, wobei xn für den Massebruch (Gew.-%/100) des Monomeren n steht und Tgn die Glasübergangstemperatur in Kelvin des Homopolymeren des Monomeren n ist. Tg-Werte für Homopolymerisate sind in Polymer Handbook 2nd Edition, JU. Wiley & Sons, New York (1975) aufgeführt.

Die Initiierung der Polymerisation erfolgt mit den für die Emulsionspolymerisation gebräuchlichen Initiatoren, insbesondere Redox-Initiator-Kombinationen aus Oxidationsinitiator und Reduktionsinitiator. Beispiele für geeignete Oxidationsinitiatoren sind die Natrium-, Kalium- und Ammoniumsalze der Peroxodischwefelsäure, Wasserstoffperoxid und Azobisisobutyronitril. Bevorzugt werden die Natrium-, Kalium- und Ammoniumsalze der Peroxidischwefelsäure und Wasserstoffperoxid. Die genannten Initiatoren werden im Allgemeinen in einer Menge von 0,01 bis 2,0 Gew.-% bezogen auf das Gesamtgewicht der Monomere, eingesetzt.

Geeignete Reduktionsmittel (Reduktionsinitiatoren) sind die Sulfite und Bisulfite der Alkalimetalle und von Ammonium, beispielsweise Natriumsulfit; die Derivate der Sulfoxylsäure wie Zink- oder Alkaliformaldehydsulfoxylate, beispielsweise Natriumhydroxymethansulfinat (Brüggolit) und Ascorbinsäure, Isoascorbinsäure oder deren Salze; oder formaldehydfreie Reduktionsmittel wie 2-Hydroxy-2-sulfinato-essigsäure-di-Natriumsalz (Brüggolith FF6). Die Reduktionsmittelmenge beträgt vorzugsweise 0,015 bis 3 Gew.-%, bezogen auf das Gesamtgewicht der Monomere.

Zur Steuerung des Molekulargewichts können während der Polymerisation regelnde Substanzen eingesetzt werden. Falls Regler eingesetzt werden, werden diese üblicherweise in Mengen zwischen 0,01 bis 5,0 Gew.- %, bezogen auf die zu polymerisierenden Monomeren, eingesetzt. Beispiele für solche Substanzen sind n-Dodecylmercaptan, tert.-Dodecylmercaptan, Mercaptopropionsäure, Mercaptopropionsäureethylester, Isopropanol und Acetaldehyd. Vorzugsweise werden keine regelnden Substanzen verwendet.

Vorzugsweise wird in Gegenwart von Schutzkolloiden polymerisiert. Geeignete Schutzkolloide sind teilverseifte Polyvinylalkohole; Polyvinylpyrrolidone; Polyvinylacetale; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine, Ligninsulfonate; synthetische Polymere wie Poly(meth)acrylsäure, Copolymerisate von (Meth)acrylaten mit carboxylfunktionellen Comonomereinheiten, Poly-(meth)acrylamid, Polyvinylsulfonsäuren und deren wasserlösliche Copolymere; Melaminformaldehydsulfonate, Naphthalinformaldehydsulfonate, Styrolmaleinsäure- und Vinylethermaleinsäure-Copolymere; kationische Polymerisate wie Polydiallyldimethylammoniumchlorid (Poly-DADMAC).

Bevorzugte Schutzkolloide sind teilverseifte oder vollverseifte Polyvinylalkohole. Besonders bevorzugt sind teilverseifte Polyvinylalkohole mit einem Hydrolysegrad von 80 bis 95 Mol-% und einer Höpplerviskosität, in 4%-iger wässriger Lösung, von 1 bis 30 mPas (Methode nach Höppler bei 20°C, DIN 53015). Besonders bevorzugt sind auch teilverseifte, hydrophob modifizierte Polyvinylalkohole mit einem Hydrolysegrad von 80 bis 95 Mol-% und einer Höpplerviskosität, in 4%-iger wässriger Lösung, von 1 bis 30 mPas. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie Vinylbutylether, Olefine wie Ethen und Decen. Der Anteil der hydrophoben Einheiten beträgt vorzugsweise 0,1 bis 10 Gew.-%, bezogen auf das Gesamtgewicht des teilverseiften Polyvinylalkohols. Es können auch Gemische der genannten Polyvinylalkohole eingesetzt werden.

Am meisten bevorzugt werden Polyvinylalkohole mit einem Hydrolysegrad von 85 bis 94 Mol-% und einer Höpplerviskosität, in 4%-iger wässriger Lösung, von 3 bis 15 mPas (Methode nach Höppler bei 20°C, DIN 53015). Die genannten Schutzkolloide sind mittels dem Fachmann bekannter Verfahren zugänglich oder im Handel erhältlich.

Die Schutzkolloide werden im Allgemeinen in einer Menge von insgesamt 1 bis 20 Gew.-% bezogen auf das Gesamtgewicht der Monomere, bei der Polymerisation zugesetzt.

Gegebenenfalls können Emulgatoren, beispielsweise anionische und/oder nichtionische Emulgatoren, bei der Polymerisation verwendet werden, beispielsweise 0,1 bis 2,0 Gew.-%, bezogen auf das Gesamtgewicht der Comonomeren. Beispiele für anionische Emulgatoren sind Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylenoxid- oder Propylenoxideinheiten, Alkyl- oder Alkylarylsulfonate mit 8 bis 18 C-Atomen, Ester und Halbester der Sulfobernsteinsäure mit einwertigen Alkoholen. Beispiele für nichtionische Emulgatoren sind $C_{12}$-$C_{14}$-Fettalkoholethoxylate mit einem Ethoxylierungsgrad von 2 bis 20 Ethylenoxid-Einheiten.

Die mit dem erfindungsgemäßen Verfahren erhältlichen wässrigen Dispersionen haben einen Feststoffgehalt von 30 bis 75 Gew.-%, vorzugsweise von 50 bis 60 Gew.-%.

Die Brookfield-Viskosität der wässrigen Dispersionen der Vinylacetat-Ethylen-Copolymere beträgt vorzugsweise 50 bis 5000 mPas, besonders bevorzugt 100 bis 3500 mPas (bestimmt mit einem Brookfield-Viskosimeter bei 23∘C bei 20 UPM bei einem Feststoffgehalt der Dispersionen von 49 bis 51 Gew.-%).

Die Vinylacetat-Ethylen-Copolymere haben mittlere Partikeldurchmesser Dw von vorzugsweise 100 nm bis 10 um, besonders bevorzugt 200 nm bis 5 um und am meisten bevorzugt 500 nm bis 3,5 um. Die Vinylacetat-Ethylen-Copolymere haben eine Polydispersität PD von bevorzugt $\leq$ 30, mehr bevorzugt PD $\leq$ 20, noch mehr bevorzugt PD $\leq$ 10, besonders bevorzugt PD $\leq$ 5 und am meisten bevorzugt PD $\leq$ 2. Die Polydispersität PD steht für das Verhältnis von gewichtsmittlerem Teilchendurchmesser Dw zu zahlenmittlerem Teilchendurchmesser Dn, PD = Dw/Dn. Die Bestimmung der Parameter Dw und Dn erfolgt mittels Laserlichtbeugung und Laserlichtstreuung mit dem Messgerät LS13320 mit dem optischen Modell PVAC.RF780D, einschließend PIDS, der Firma Beckmann-Coulter unter Verwendung der Stoffkonstanten für Polyvinylacetat und unter Beachtung der Vorschrift des Geräteherstellers.

Die wässrigen Dispersionen können zur Herstellung von in Wasser redispergierbaren Polymerpulvern verwendet werden. Dazu werden die wässrigen Dispersionen, gegebenenfalls nach Zusatz von Schutzkolloiden als Verdüsungshilfe, mittels Wirbelschichttrocknung, Gefriertrocknung oder vorzugsweise Sprühtrocknung getrocknet.

Die wässrigen Polymerdispersionen und die in Wasser redispergierbaren Polymerpulver können in den dafür typischen Anwendungsbereichen eingesetzt werden. Beispielsweise in bauchemischen Produkten, gegebenenfalls in Verbindung mit hydraulisch abbindenden Bindemitteln wie Zementen, Gips und Wasserglas, für die Herstellung von Bauklebern, insbesondere Fliesenkleber und Vollwärmeschutzkleber, Putzen, Spachtelmassen, Fußbodenspachtelmassen, Verlaufsmassen, Dichtschlämmen, Fugenmörtel und Farben. Ferner als Bindemittel für Beschichtungsmittel und Klebemittel oder als Beschichtungs- oder Bindemittel für Textilien und Papier.

Überraschenderweise sind mit dem erfindungsgemäßen Verfahren auch während des zeitlichen Verlaufs der kontinuierlichen Emulsionspolymerisation Vinylacetat-Ethylen-Copolymere mit gleichbleibendem Eigenschaftsprofil erhältlich, wie Partikelgrößenverteilung, Modalität oder Viskosität. Damit können erfindungsgemäß durch kontinuierliche Polymerisation hergestellte Dispersionen herkömmlich in Batch-Reaktoren, semi-Batch-Reaktoren oder kontinuierlichen Rührkesselkaskaden hergestellte Polymerdispersionen substituieren. Im Vergleich zu Batch-, semi-Batch- oder Rührkesselkaskaden-Verfahren kann erfindungsgemäß die Raum-Zeit-Leistung (Prozesseffizienz) gesteigert werden. Gegenüber Rührkesselkaskaden kann auch die Qualität der Copolymere, wie Partikelgrößenverteilung, Modalität oder Viskosität, verbessert werden. Zudem kann gegenüber Rührkesselkaskaden der Initiatorverbrauch reduziert werden.

Durch das erfindungsgemäße Verfahren wird im Vergleich zu herkömmlichen Rohrreaktoren die Bildung von Ablagerungen (Fouling) überraschend vermindert, so dass Ausfallzeiten des Rohrreaktors für die Entfernung der Ablagerungen verkürzt werden, was sich auch vorteilhaft auf die Raum-Zeit-Leistung (Prozesseffizienz) auswirkt, und wodurch eine höhere Anlagenverfügbarkeit erreicht wird. Erfindungsgemäß können auch vorteilhaft enge Verweilzeiten des Reaktorinhalts im Rohrreaktor erreicht werden.

Die nachfolgenden Beispiele dienen der weiteren Erläuterung der Erfindung:

Allgemeine Versuchsbeschreibung:

Die Polymerisation wurde in einem Rohrreaktor (1) mit einer Länge von 1600 mm und einem Innendurchmesser von 100 mm durchgeführt. Das Reaktorvolumen betrug 12,5 Liter. Die Reaktionsmischung wurde quer zur Längsachse gemischt durch einen Rührer (3) mit mehreren Rührerblättern (4) der Dimension 50 mm X 50 mm, der Abstand der Rührerblätter zur Reaktorwand betrug 25 mm, eine Berührung der Reaktorwand wurde damit vermieden. Entlang der Reaktorachse gab es noch 5 weitere Zugabemöglichkeiten (9a) bis (9e) für Initiator.

Der Rohrreaktor (1) wurde kontinuierlich aus einem vorgelagerten Druckbehälter (6) mit einem Volumen von 16 Liter mit dem zu polymerisierenden Stoffgemisch versorgt. Der vorgelagerte Druckbehälter (6) wurde über Pumpen kontinuierlich mit den entsprechenden Stoffen befüllt.

Nach Austritt aus dem Rohrreaktor (1) wurde das Produkt über ein Druckhalteventil (7a) in einen Drucklosbehälter (8) mit einem Volumen von 1000 Liter transferiert und gesammelt. Am Ende des Versuches wurde das Produktgemisch nachbehandelt und abgefüllt.

Zu polymerisierende Zusammensetzung:

Folgende Stoffe wurden einem vorgeschalteten Druckbehälter (Rührkessel) (6) kontinuierlich zugeführt und vorgemischt:

4,4 kg/h Wasser, 4,0 kg/h einer 20 Gew.-%igen wässrigen Lösung eines teilverseiften Polyvinylalkohols mit einem Hydrolysegrad von 88 Mol-% und einer Höpplerviskosität von 4 mPas (bestimmt nach DIN 53015 bei 20°C in 4 Gew.-%iger wässriger Lösung), 10,4 kg/h Vinylacetat, 1,15 kg/h Ethylen, 195 g/h 5 Gew.-%ige wässrige Ascorbinsäurelösung, 1,5 g/h Ameisensäure und 4 g/h 1 Gew.-%ige wässrige Eisenammoniumsulfatlösung.

Die zu polymerisierende Zusammensetzung wurde mit einer Rate von 20 kg/h in den Rohrreaktor (1) überführt.

An den Dosierstellen (9a) bis (9e) wurde der Initiator Kaliumpersulfat als 3 Gew.-%ige wässrige Lösung zudosiert.

Das fertige Produkt verließ mit einem Umsatz von 92% den Rohrreaktor (1) und wurde in einem Drucklosbehälter (8) im Vakuum gesammelt.

Die Dispersion wurde anschließend zur Abtrennung von überschüssigem Ethylen in einen weiteren Drucklosbehälter, in dem ein Druck von 0,7 bar angelegt wurde, transferiert und dort durch Zugabe von 0,4 kg einer 10 Gew.-%igen wässrigen t-Butylhydroperoxidlösung und 0,8 kg einer 5 Gew.-%igen wässrigen Ascorbinsäurelösung bezogen auf 100 kg Dispersion nachpolymerisiert bis zu einem Wert von < 1000 ppm Restvinylacetat. Der pH-Wert wurde durch Zugabe von Natronlauge (10 Gew.-%ige wässrige Lösung) auf 4,5 eingestellt. Zuletzt wurde der Ansatz über ein 250 um Sieb aus dem Drucklosbehälter abgefüllt.

Im Versuch wurde das zu polymerisierende Gemisch am unteren Ende des Rohrreaktors (1) eingeführt und am oberen Ende das Produkt entnommen. Die Initiatordosierraten betrugen

(9a) 0,11 kg/h
(9b) 0,11 kg/h
(9c) 0,21 kg/h
(9d) 0,30 kg/h
(9e) 0,40 kg/h

Die Durchflussrate betrug ca. 20 Liter/h. Die Rührerdrehzahl betrug 800 Umdrehungen/Minute. Der Druck im Reaktor (1) wurde über das Transferventil (7a) auf 55 bar eingestellt.

Vergleichsbeispiel 1:

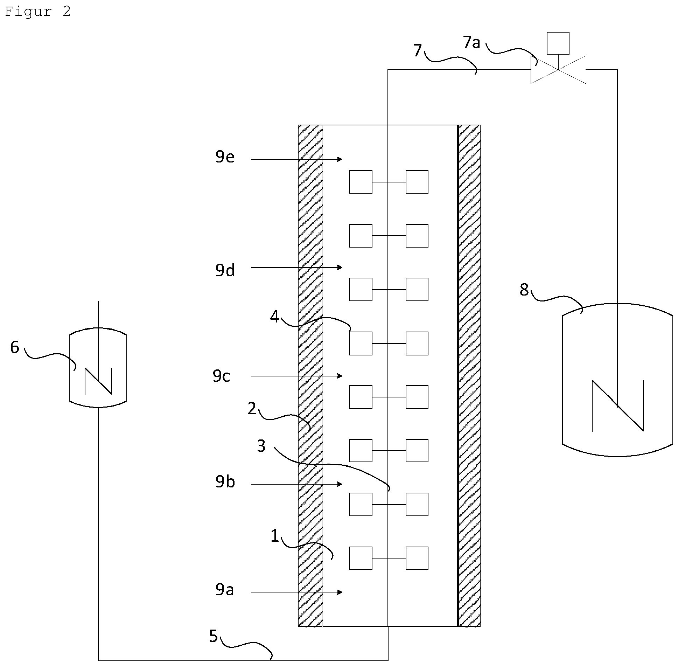

Die Emulsionspolymerisation wurde in einer Anlage gemäß Figur 2 durchgeführt.

Der Rohrreaktor (1) hatte keine Trennbleche und wurde mit acht Rührerblättern (4) in 4 Ebenen betrieben.

Nach 30 h wurde die Polymerisation beendet und das freie Volumen des Rohrreaktors (1) durch Auffüllen mit Wasser und Auswiegen der Wassermenge bestimmt. Das Reaktorvolumen wurde bei diesem Vorgehen mit 8,75 Liter ermittelt. Damit verlor der Reaktor nach 30 h 3,75 Liter Volumen gleichbedeutend mit einem entsprechenden Aufbau von Wandbelag im Umfang von 30% des Reaktorvolumens.

Während des Versuchs wurden stündlich Proben genommen. Die Teilchengrößenverteilung zeigte sich dabei stark instabil, es wurden mono- und bimodale Verteilungen beobachtet, der Dw-Wert nach Beckmann Coulter schwankte zwischen 1000 und 6000 nm. Ebenfalls wurden Schwankungen im Festgehalt und Umsatz beobachtet, der Umsatz lag stets bei <90 %.

Insgesamt konnten keine stabilen Betriebsbedingungen und keine hinreichende Produktqualität erreicht werden. Aufgrund der zunehmend inhomogenen Temperaturverteilungen im Reaktor in Folge des zonenweise bereits sehr starken Foulings wurde der Versuch nach 30 h abgebrochen.

Beispiel 2:

Die Emulsionspolymerisation wurde in einer Anlage gemäß Figur 1 durchgeführt.

Der Rohrreaktor (1) wurde durch 9 Trennbleche (10) in 10 Zellen mit einer Höhe von 160 mm geteilt. Das Rühraggregat (3) wurde mit 10 zweiblättrigen Rührern (4) mit den Abmessungen 50x50 mm ausgeführt, so dass in jeder Zelle zentrisch ein Rührer (4) saß. Der Reaktormantel inklusive der Dosierstellen wurde unverändert belassen. Die Rührerdrehzahl betrug weiter 800 U/min.

Nach 30 h wurde die Polymerisation beendet und das freie Volumen des Rohrreaktors (1) durch Auffüllen mit Wasser und Auswiegen der Wassermenge bestimmt. Das Reaktorvolumen wurde bei diesem Vorgehen mit 11,3 Liter ermittelt, das heißt der Rohrreaktor (1) verlor nach 30 h 1,2 Liter Volumen gleichbedeutend mit einem entsprechenden Aufbau von Wandbelag im Umfang von < 10% des Behältervolumens.

Während des Versuchs wurden stündlich Proben genommen. Nach kurzer Anlaufzeit zeigte sich eine sehr konstante Produktqualität. Die erhaltene Teilchengrößenverteilung war monomodal und während des gesamten Versuchs stabil. Der Restmonomergehalt nach dem Rohrreaktor (1) lag bei 5%. Es wurde ein Endprodukt mit folgenden Eigenschaften erhalten:

| | |
|---|---|
| Feststoffgehalt | 58,5 %, |
| pH-Wert | 4, 5, |

(fortgesetzt)

| | |
|---|---|
| Viskosität (Brookfield bei 23°C und 20 Upm) | 1500 mPas, |
| Partikelgrößenverteilung Dw (Beckmann Coulter) | 1300 nm, |
| Glasübergangstemperatur (DSC nach ISO 11357) | 16°C. |

Beispiel 3:

Die Emulsionspolymerisation wurde in derselben Anlage und nach dem demselben Verfahren wie Beispiel 2 durchgeführt, mit dem Unterschied, dass an den flüssigkeitsdurchlässigen Öffnungen (13) der Trennbleche (10) beidseitig Leitbleche (14) angebracht wurden, wie in Figur 3 gezeigt. Die Länge L der Leitbleche in Hauptströmungsrichtung betrug das 1,5-fache des freien Durchmessers der flüssigkeitsdurchlässigen Öffnungen (13) der Trennbleche.

Nach 30 h wurde die Polymerisation beendet und das freie Volumen des Rohrreaktors (1) durch Auffüllen mit Wasser und Auswiegen der Wassermenge bestimmt. Das Reaktorvolumen wurde bei diesem Vorgehen mit 11,5 Liter ermittelt, das heißt der Rohrreaktor (1) verlor nach 30 h 1,0 Liter Volumen gleichbedeutend mit einem entsprechenden Aufbau von Wandbelag im Umfang von < 10% des Behältervolumens.

Während des Versuchs wurden stündlich Proben genommen. Nach kurzer Anlaufzeit zeigte sich eine sehr konstante Produktqualität. Die erhaltene Teilchengrößenverteilung war monomodal und während des gesamten Versuchs stabil. Die mittlere Teilchengröße entsprach der mittleren Teilchengröße des Batchproduktes. Der Restmonomergehalt nach dem Rohrreaktor (1) lag bei < 5%. Es wurde ein Endprodukt mit folgenden Eigenschaften erhalten:

| | |
|---|---|
| Feststoffgehalt | 58,5 %, |
| pH-Wert | 4,5, |
| Viskosität (Brookfield bei 23°C und 20 Upm) | 1500 mPas, |
| Partikelgrößenverteilung Dw (Beckmann Coulter) | 1100 nm, |
| Glasübergangstemperatur (DSC nach ISO 11357) | 16°C. |

**Patentansprüche**

1. Verfahren zur Herstellung von Vinylacetat-Ethylen-Copolymeren in Form von wässrigen Dispersionen mittels radikalisch initiierter Emulsionspolymerisation in einem kontinuierlich betriebenen Rohrreaktor, **dadurch gekennzeichnet, dass** in den Rohrreaktor quer zur Fließrichtung des Reaktorinhalts ein oder mehrere mit flüssigkeitsdurchlässigen Öffnungen versehene Trennbleche angebracht sind.

2. Verfahren zur Herstellung von Vinylacetat-Ethylen-Copolymeren in Form von wässrigen Dispersionen nach Anspruch 1, **dadurch gekennzeichnet, dass** der Rohrreaktor 3 bis 30 Trennbleche enthält.

3. Verfahren zur Herstellung von Vinylacetat-Ethylen-Copolymeren in Form von wässrigen Dispersionen nach Anspruch 1 oder 2, **dadurch gekennzeichnet, dass** zwischen Trennblech und Rohrreaktorinnenwand kein flüssigkeitsdurchlässiger Spalt vorhanden ist.

4. Verfahren zur Herstellung von Vinylacetat-Ethylen-Copolymeren in Form von wässrigen Dispersionen nach Anspruch 1 bis 3, **dadurch gekennzeichnet, dass** benachbarte Trennbleche durch ein oder mehrere Stäbe miteinander verbunden sind.

5. Verfahren zur Herstellung von Vinylacetat-Ethylen-Copolymeren in Form von wässrigen Dispersionen nach Anspruch 4, **dadurch gekennzeichnet, dass** das Gebilde aus benachbarten Trennblechen und einem oder mehreren Stäben am Reaktorboden und/oder am Reaktordeckel befestigt ist.

6. Verfahren zur Herstellung von Vinylacetat-Ethylen-Copolymeren in Form von wässrigen Dispersionen nach Anspruch 1 bis 5, **dadurch gekennzeichnet, dass** der Reaktorinhalt ein Trennblech ausschließlich durch ein oder mehrere flüssigkeitsdurchlässige Öffnungen passiert.

7. Verfahren zur Herstellung von Vinylacetat-Ethylen-Copolymeren in Form von wässrigen Dispersionen nach Anspruch 1 bis 6, **dadurch gekennzeichnet, dass** ein oder mehrere Trennbleche je nur eine flüssigkeitsdurchlässige Öffnung haben.

8. Verfahren zur Herstellung von Vinylacetat-Ethylen-Copolymeren in Form von wässrigen Dispersionen nach Anspruch 1 bis 7, **dadurch gekennzeichnet, dass** ein oder mehrere Leitbleche an den Rand von einer oder mehreren flüssigkeitsdurchlässigen Öffnungen von einem oder mehreren Trennblechen angebracht sind.

9. Verfahren zur Herstellung von Vinylacetat-Ethylen-Copolymeren in Form von wässrigen Dispersionen nach Anspruch 8, **dadurch gekennzeichnet, dass** ein Leitblech nur in eine oder in beide der durch ein Trennblech getrennten Zellen ragt.

10. Verfahren zur Herstellung von Vinylacetat-Ethylen-Copolymeren in Form von wässrigen Dispersionen nach Anspruch 8 oder 9, **dadurch gekennzeichnet, dass** die Leitbleche auf der in Fließrichtung des Reaktorinhalts stromabwärts gelegenen Seite des Trennblechs angebracht sind.

11. Verfahren zur Herstellung von Vinylacetat-Ethylen-Copolymeren in Form von wässrigen Dispersionen nach Anspruch 8 bis 10, **dadurch gekennzeichnet, dass** die Leitbleche mit der Länge L in die beiden durch ein Trennblech getrennten Zellen ragen und das Verhältnis der Länge L eines Leitblechs zu einem freien Durchmesser einer flüssigkeitsdurchlässigen Öffnung $\geq 0{,}25$ und $\leq 10$ ist.

12. Verfahren zur Herstellung von Vinylacetat-Ethylen-Copolymeren in Form von wässrigen Dispersionen nach Anspruch 1 bis 11, **dadurch gekennzeichnet, dass** der Rohrreaktor ein Rühraggregat enthält, das einen Rührerschaft umfasst, an den ein oder mehrere Rührerblätter angebracht sind, und
der Rührerschaft durch eine flüssigkeitsdurchlässige Öffnung eines oder mehrerer Trennbleche geführt ist.

13. Verfahren zur Herstellung von Vinylacetat-Ethylen-Copolymeren in Form von wässrigen Dispersionen nach Anspruch 12, **dadurch gekennzeichnet, dass** der Rührerschaft eine flüssigkeitsdurchlässige Öffnung eines oder mehrerer Trennbleche nicht vollständig ausfüllt.

14. Verfahren zur Herstellung von Vinylacetat-Ethylen-Copolymeren in Form von wässrigen Dispersionen nach Anspruch 12 oder 13, **dadurch gekennzeichnet, dass** sich der Rührerschaft von einem Längsende bis zum anderen Längsende eines Rohrreaktors erstreckt.

15. Verfahren zur Herstellung von Vinylacetat-Ethylen-Copolymeren in Form von wässrigen Dispersionen nach Anspruch 1 bis 14, **dadurch gekennzeichnet, dass** in den Rohrreaktor axial zur Fließrichtung des Reaktorinhalts ein oder mehrere Stromstörerplatten angebracht sein.

16. Verfahren zur Herstellung von Vinylacetat-Ethylen-Copolymeren in Form von wässrigen Dispersionen nach Anspruch 1 bis 15, **dadurch gekennzeichnet, dass** die Fließrichtung des Reaktorinhalts im Rohrreaktor nicht umgekehrt wird.

## Claims

1. Process for preparing vinyl acetate-ethylene copolymers in the form of aqueous dispersions by means of radically initiated emulsion polymerization in a continuously operated tubular reactor, **characterized in that** one or more dividing plates bearing liquid-permeable openings are mounted in the tubular reactor transverse to the flow direction of the reactor contents.

2. Process for preparing vinyl acetate-ethylene copolymers in the form of aqueous dispersions according to Claim 1, **characterized in that** the tubular reactor contains 3 to 30 dividing plates.

3. Process for preparing vinyl acetate-ethylene copolymers in the form of aqueous dispersions according to Claim 1 or 2, **characterized in that** there is no liquid-permeable gap between dividing plate and inner tubular-reactor wall.

4. Process for preparing vinyl acetate-ethylene copolymers in the form of aqueous dispersions according to Claim 1 to 3, **characterized in that** adjacent dividing plates are connected to one another by one or more bars.

5. Process for preparing vinyl acetate-ethylene copolymers in the form of aqueous dispersions according to Claim 4, **characterized in that** the construct composed of adjacent dividing plates and one or more bars is fastened on the reactor floor and/or on the reactor cover.

**6.** Process for preparing vinyl acetate-ethylene copolymers in the form of aqueous dispersions according to Claim 1 to 5, **characterized in that** the reactor contents traverse a dividing plate exclusively through one or more liquid-permeable openings.

**7.** Process for preparing vinyl acetate-ethylene copolymers in the form of aqueous dispersions according to Claim 1 to 6, **characterized in that** one or more dividing plates each have only one liquid-permeable opening.

**8.** Process for preparing vinyl acetate-ethylene copolymers in the form of aqueous dispersions according to Claim 1 to 7, **characterized in that** one or more guide plates are mounted at the edge of one or more liquid-permeable openings in one or more dividing plates.

**9.** Process for preparing vinyl acetate-ethylene copolymers in the form of aqueous dispersions according to Claim 8, **characterized in that** a guide plate projects only into one or into both of the cells divided by a dividing plate.

**10.** Process for preparing vinyl acetate-ethylene copolymers in the form of aqueous dispersions according to Claim 8 or 9, **characterized in that** the guide plates are mounted on the side of the dividing plate that lies downstream in the flow direction of the reactor contents.

**11.** Process for preparing vinyl acetate-ethylene copolymers in the form of aqueous dispersions according to Claim 8 to 10, **characterized in that** the guide plates project by the length L into the two cells divided by a dividing plate and the ratio of the length L of a guide plate to a free diameter of a liquid-permeable opening is $\geq 0.25$ and $\leq 10$.

**12.** Process for preparing vinyl acetate-ethylene copolymers in the form of aqueous dispersions according to Claim 1 to 11, **characterized in that** the tubular reactor contains a stirring assembly which comprises a stirrer shaft on which one or more stirrer blades are mounted, and
the stirrer shaft is routed through a liquid-permeable opening in one or more dividing plates.

**13.** Process for preparing vinyl acetate-ethylene copolymers in the form of aqueous dispersions according to Claim 12, **characterized in that** the stirrer shaft does not completely fill a liquid-permeable opening in one or more dividing plates.

**14.** Process for preparing vinyl acetate-ethylene copolymers in the form of aqueous dispersions according to Claim 12 or 13, **characterized in that** the stirrer shaft extends from one longitudinal end to the other longitudinal end of a tubular reactor.

**15.** Process for preparing vinyl acetate-ethylene copolymers in the form of aqueous dispersions according to Claim 1 to 14, **characterized in that** one or more baffles are mounted in the tubular reactor axial to the flow direction of the reactor contents.

**16.** Process for preparing vinyl acetate-ethylene copolymers in the form of aqueous dispersions according to Claim 1 to 15, **characterized in that** the flow direction of the reactor contents is not reversed in the tubular reactor.

**Revendications**

**1.** Procédé pour la préparation de copolymères d'acétate de vinyle-éthylène sous forme de dispersions aqueuses au moyen d'une polymérisation en émulsion initiée par voie radicalaire dans un réacteur tubulaire exploité en continu, **caractérisé en ce qu'**une ou plusieurs tôles de séparation pourvues d'ouvertures perméables à un liquide sont agencées dans le réacteur tubulaire, transversalement par rapport à la direction d'écoulement du contenu du réacteur.

**2.** Procédé pour la préparation de copolymères d'acétate de vinyle-éthylène sous forme de dispersions aqueuses selon la revendication 1, **caractérisé en ce que** le réacteur tubulaire contient 3 à 30 tôles de séparation.

**3.** Procédé pour la préparation de copolymères d'acétate de vinyle-éthylène sous forme de dispersions aqueuses selon la revendication 1 ou 2, **caractérisé en ce qu'**il n'existe pas de fente perméable à un liquide entre la tôle de séparation et la paroi interne du réacteur tubulaire.

**4.** Procédé pour la préparation de copolymères d'acétate de vinyle-éthylène sous forme de dispersions aqueuses selon la revendication 1 à 3, **caractérisé en ce que** des tôles de séparation adjacentes sont reliées les unes aux autres par une ou plusieurs barres.

**5.** Procédé pour la préparation de copolymères d'acétate de vinyle-éthylène sous forme de dispersions aqueuses selon la revendication 4, **caractérisé en ce que** la structure constituée par des tôles de séparation adjacentes et une ou plusieurs barres est fixée au fond du réacteur et/ou au couvercle du réacteur.

**6.** Procédé pour la préparation de copolymères d'acétate de vinyle-éthylène sous forme de dispersions aqueuses selon la revendication 1 à 5, **caractérisé en ce que** le contenu du réacteur passe à travers une tôle de séparation exclusivement à travers une ou plusieurs ouvertures perméables à un liquide.

**7.** Procédé pour la préparation de copolymères d'acétate de vinyle-éthylène sous forme de dispersions aqueuses selon la revendication 1 à 6, **caractérisé en ce qu'**une ou plusieurs tôles de séparation ne présente(nt) qu'une seule ouverture perméable à un liquide.

**8.** Procédé pour la préparation de copolymères d'acétate de vinyle-éthylène sous forme de dispersions aqueuses selon la revendication 1 à 7, **caractérisé en ce qu'**une ou plusieurs tôles déflectrices sont agencées au niveau du bord d'une ou de plusieurs ouvertures perméables à un liquide d'une ou de plusieurs tôles de séparation.

**9.** Procédé pour la préparation de copolymères d'acétate de vinyle-éthylène sous forme de dispersions aqueuses selon la revendication 8, **caractérisé en ce qu'**une tôle déflectrice fait saillie uniquement dans une ou dans les deux cellules séparées par une tôle de séparation.

**10.** Procédé pour la préparation de copolymères d'acétate de vinyle-éthylène sous forme de dispersions aqueuses selon la revendication 8 ou 9, **caractérisé en ce que** les tôles déflectrices sont agencées sur le côté situé en aval, dans le sens d'écoulement du contenu du réacteur, de la tôle de séparation.

**11.** Procédé pour la préparation de copolymères d'acétate de vinyle-éthylène sous forme de dispersions aqueuses selon la revendication 8 à 10, **caractérisé en ce que** les tôles déflectrices font saillie de la longueur L dans les deux cellules séparées par une tôle de séparation et le rapport de la longueur L d'une tôle déflectrice à un diamètre libre d'une ouverture perméable à un liquide est $\geq 0,25$ et $\leq 10$.

**12.** Procédé pour la préparation de copolymères d'acétate de vinyle-éthylène sous forme de dispersions aqueuses selon la revendication 1 à 11, **caractérisé en ce que** le réacteur tubulaire contient une unité d'agitation,

qui comprend une tige d'agitateur, sur laquelle sont agencées une ou plusieurs pales d'agitateur et
la tige d'agitateur est guidée à travers une ouverture perméable à un liquide d'une ou de plusieurs tôles de séparation.

**13.** Procédé pour la préparation de copolymères d'acétate de vinyle-éthylène sous forme de dispersions aqueuses selon la revendication 12, **caractérisé en ce que** la tige d'agitateur ne remplit pas complètement une ouverture perméable à un liquide d'une ou de plusieurs tôles de séparation.

**14.** Procédé pour la préparation de copolymères d'acétate de vinyle-éthylène sous forme de dispersions aqueuses selon la revendication 12 ou 13, **caractérisé en ce que** la tige d'agitateur s'étend à partir d'une extrémité longitudinale jusqu'à l'autre extrémité longitudinale d'un réacteur tubulaire.

**15.** Procédé pour la préparation de copolymères d'acétate de vinyle-éthylène sous forme de dispersions aqueuses selon la revendication 1 à 14, **caractérisé en ce qu'**une ou plusieurs plaques de perturbation du flux sont agencées dans le réacteur tubulaire, axialement par rapport à la direction d'écoulement du contenu du réacteur.

**16.** Procédé pour la préparation de copolymères d'acétate de vinyle-éthylène sous forme de dispersions aqueuses selon la revendication 1 à 15, **caractérisé en ce que** le sens d'écoulement du contenu du réacteur dans le réacteur tubulaire n'est pas inversé.

Figur 1

Figur 2

Figur 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1323752 B1
- US 4383093 A
- EP 3256497 B1
- DE 1137216
- US 20159068031 A
- WO 2015089823 A
- EP 2471594 A
- EP 0029701 A
- EP 2019061017 W
- WO 2020221435 A1

**In der Beschreibung aufgeführte Nicht-Patentliteratur**

- **MARKO ZLOKARNIK.** Rührtechnik - Theorie und Praxis. Springer-Verlag, 1999, 305-308
- **FOX T. G.** *Bull. Am. Physics Soc.,* 1956, vol. 1 (3), 123
- Polymer Handbook. Wiley & Sons, 1975